Europäisches Patentamt

European Patent Office

Office européen des brevets

(11) Veröffentlichungsnummer: **0 331 968**

**A1**

(12) **EUROPÄISCHE PATENTANMELDUNG**

(21) Anmeldenummer: 89102975.3

(51) Int. Cl.4: **B29B 7/42 , B29B 7/00**

(22) Anmeldetag: 21.02.89

(30) Priorität: 25.02.88 DE 3805878

(43) Veröffentlichungstag der Anmeldung:
13.09.89 Patentblatt 89/37

(84) Benannte Vertragsstaaten:
DE ES GB IT SE

(71) Anmelder: HÜLS AKTIENGESELLSCHAFT
- RSP Patente / PB 15 - Postfach 13 20
D-4370 Marl 1(DE)

(72) Erfinder: Goergen, Richard
Im Wingert 32
D-5207 Ruppichteroth(DE)
Erfinder: Lob, Heinrich
Bergheimer Strasse 38
D-5210 Troisdorf(DE)
Erfinder: Weissenfels, Franz, Dr.
Am Grafenkreuz 17
D-5200 Siegburg(DE)
Erfinder: Schelhase, Klaus
Reichensteinstrasse 24
D-5210 Troisdorf(DE)

(54) Verfahren zur kontinuierlichen Herstellung von schäum- und härtbaren, Feststoffe enthaltenden Phenolresolharzen.

(57) Vorliegende Erfindung behandelt die kontinuierliche Herstellung von schäum- und härtbaren Phenolresolharz-Gemischen in kontinuierlich betriebenen Mischern. Das Vermischen erfolgt erfindungsgemäß in Injektionsmischern, bei denen ein mit einer Injektionsspirale (1, 3) versehenes Injektorrohr (2) in ein Mischerrohr (4) hineinragt. Das Mischerrohr ist mit einer Misch- und Förderspirale versehen, die das Mischgut in Form eines Flüssigkeitsrings an der Wandung des Rohres vermischt und zum Austrittsende des Mischers hin befördert. Der Härter (8) wird in denjenigen Teil des Mischerrohres eingegeben, der in Richtung der Austrittsdüse hinter dem Ende des Injektionsrohres angeordnet ist. Die erfindungsgemäße Herstellung ermöglicht ein gleichzeitiges Vermischen aller Bestandteile eines gefüllten Phenolharzschaumes vor der Aushärtung des Schaumes, ohne daß eine Vormischung notwendig ist und eignet sich auch zur Herstellung hochgefüllter Schäume mit Feststoffgehalten bis zu 80 Gew.-%.

Fig. 1

EP 0 331 968 A1

## Verfahren zur kontinuierlichen Herstellung von schäum- und härtbaren, Feststoffe enthaltenden Phenolresolharzen

Gegenstand der vorliegenden Erfindung ist ein Verfahren zur kontinuierlichen Herstellung von schäum- und härtbaren, Feststoffe enthaltenden Phenolresolharz-Gemischen in einem kontinuierlich arbeitenden Mischaggregat. Die nach dem Verfahren hergestellten Gemische schäumen kurz nach ihrer Herstellung zu einem Phenolharzschaumstoff auf und härten im aufgeschäumten Zustand aus.

Es ist bekannt, flüssigen Phenolresolharzen Treibmittel und Härter unterzumischen, damit das erhaltene Gemisch zu Formkörpern gewünschter Strukturen aufschäumt und in der aufgeschäumten Form aushärtet. Es ist weiterhin bekannt, diesem aufzuschäumenden Gemisch zusätzlich noch oberflächenaktive Substanzen als Zellregulatoren, Modifizierungsmittel, z. B. zur Verbesserung des Brandverhaltens, Farbpulver und Füllstoffe unterzumischen.

Die Herstellung solcher schäum- und härtbarer Gemische mit Anteilen fester, pulverförmiger oder auch grobvolumiger Komponenten als Füllstoffe, Modifizierungsmittel oder Härter erfolgte bisher in der Weise, daß entweder alle Stoffe zusammen chargenweise in geeigneten Intensivmischern vermischt wurden und das erhaltene Gemisch dann anschließend nach dem Abfüllen in geeignete Formen in diesen aufgeschäumt und ausgehärtet wurde, oder es wurden die Feststoffe mit den flüssigen Komponenten des Phenolresolharzes zu einer dosierfähigen Paste oder Emulsion oder Dispersion vorgemischt, die dann den übrigen Bestandteilen des Phenolresolharzes hinzugefügt wurden. Dieses Zumischen kann auch bei einer kontinuierlich betriebenen Doppelbandpresse erfolgen.

Die Vorabmischung der feststoffhaltigen Pasten oder Vormischungen ist jedoch auf solche Fälle beschränkt, in denen die Feststoffe nicht mit dem Anpastmittel in einer Weise reagieren, daß das erhaltene Gemisch nicht mehr dosierfähig wird oder aber der Feststoff seine Wirksamkeit für die ihm zugedachte Aufgabe verliert, was z. B. beim Anpasten von Bortrioxid mit wasserhaltigen Phenolresolharzen der Fall ist.

Es ist auch schon bekannt, die flüssigen oder pastenförmigen Bestandteile des schäum- und härtbaren Phenolresolharzes kontinuierlich in einem Mischer zu vermischen (vgl. DE-PS 21 09 848). Bei dieser Arbeitsweise muß der Mischer aber zwei unter unterschiedlichem Druck stehende Kammern besitzen, wobei der Druck der Vorkammer, in die das Resolharz zusammen mit dem Treibmittel und gegebenenfalls den angepasteten Modifizierungsmitteln eingegeben wird, höher sein muß als der Druck in der Mischkammer, in die der Härter eingegeben wird. In einem solchen Mischer mit geschlossenem System lassen sich Feststoffe in nicht angeteigter Form nicht vermischen. Weiterhin erfolgt bei diesen Mischern während des Mischvorganges ein ungewünschter Temperaturanstieg, so daß das Phenolresolharz vorgekühlt eingegeben werden muß (vgl. DE-PS 21 59 726).

Es bestand deshalb die Aufgabe, alle Komponenten eines schäum- und härtbaren Phenolresolharzes in der Weise zu vermischen, daß eine Vormischung oder Anpastung einzelner Komponenten nicht notwendig ist und alle Komponenten gleichzeitig in einen Mischer eingegeben werden können. Weiterhin war es Aufgabe der vorliegenden Erfindung, die Vermischung dieser Komponenten so durchzuführen, daß der Mischvorgang in kurzer Zeit abgeschlossen ist und das Mischgut ohne Rückstände vollständig aus dem Mischer ausgetragen wird und daß während des Mischvorganges praktisch keine nennenswerte Erwärmung des Mischguts eintritt, so daß eine zusätzliche Temperierung oder Kühlung nicht notwendig ist.

Selbstverständlich soll weiterhin der aus dem gemischten Phenolresolharz nach dessen Austreten aus dem Mischer erhaltene Phenolharzschaum mindestens die gleichen guten Eigenschaften besitzen wie ein solcher Schaum, der aus einem Phenolresolharz-Gemisch erhalten wurde, das nach einem der oben beschriebenen Verfahren hergestellt wurde. Insbesondere soll der Schaum eine gleichmäßige Struktur haben, keine Lunker enthalten (die u. a. von Luftbläschen in dem Phenolresolharz-Gemisch herrühren) und die gewünschte Porenstruktur besitzen.

In Erfüllung dieser Aufgabe wurde nun ein Verfahren zur kontinuierlichen Herstellung eines schäum- und härtbaren, Feststoffe enthaltenden Phenolresolharz-Gemischs in einem kontinuierlich betriebenen Mischer gefunden, das durch die in dem kennzeichnenden Teil des Anspruchs 1 genannten Maßnahmen beschrieben ist.

Die erfindungsgemäße Verfahrensweise des Vermischens der einzelnen Komponenten ermöglicht es, diese Komponenten ohne Vormischung alle zusammen gemeinsam zu vermischen und dabei ein homogenes Gemisch zu erhalten, das nach seinem Austritt aus der Austrittsdüse des Mischers zu einem Phenolharzschaum der geforderten Qualität aufschäumt und aushärtet.

Der Erfindung liegt nicht nur die Erkenntnis zugrunde, daß das Vermischen in einem Injektionsmischer dieses Resultat ergibt, sondern daß zusätzlich noch die Maßnahme der Dosierung der Härterflüssigkeit in dem angegebenen Bereich und die Regulierung des Masseflusses zu dem gewünschten Erfolg führt.

2

EP 0 331 968 A1

Injektionsmischer sind an sich bekannt; sie werden beispielsweise in den EP 0 030 488-A1 und EP 0 067 725-A1 und dem Prospekt 051 NT 09841 der Food Machinery Europe N.V. beschrieben. Bei den erfindungsgemäß einzusetzenden Injektionsmischern ragt das Ende eines Injektorrohres 2 in ein Mischerrohr 4 hinein. In dem Mischerrohr 4 werden die Komponenten durch die sich drehende Spirale 3 in Form eines Flüssigkeitsringes an der Wandung des Rohres vermischt und zum Austrittsende des Mischerrohres hin befördert. Die einzelnen Komponenten des Gemischs werden in den Mischer eingepumpt, der drucklos betrieben wird und der an dem der Austrittsöffnung entgegengesetzten Ende offen ist. Solche Mischer werden u. a. zum Vermischen der Bestandteile von z. B. Teigwaren, Fruchtsäften, Viehfutter, Lacken und Seifen eingesetzt.

Bei der erfindungsgemäßen Verfahrensweise ist zusätzlich zu den Einlaßöffnungen für die Stoffe 9 und die Flüssigkeiten 10 eine weitere Einlaßöffnung 11 für die Härterflüssigkeit vorgesehen. Diese Öffnung 11 ist hinter dem Ausgang des Injektorrohres 2 angeordnet. Ihr Abstand von dem Ende des Injektorrohres 2 in Richtung der Austrittsdüse 12 hängt u. a. von der Länge des Mischerrohres 4, der Länge, mit der das Injektorrohr 2 in das Mischerrohr 4 einragt und von dem Abstand des Einlasses 10 vom Ende des Injektorrohres 2 ab. Der Abstand vom Ende des Mischerrohres 4 zu der Austrittsdüse 12 soll jedoch in jedem Fall noch so groß sein, daß eine homogene Untermischung des Härters unter das gesamte aufzuschäumende Phenolresolharz-Gemisch erfolgt.

Die Verweildauer des gesamten Phenolresolharz-Gemischs im Mischerrohr 4 muß so bemessen sein, daß noch kein Aufschäumen erfolgt. Im allgemeinen tritt dies bis zu einer Verweildauer von etwa 30 Sekunden nicht ein. Deshalb soll im allgemeinen das Gemisch maximal nur bis 25 Sekunden im Mischerrohr 2 verbleiben und dann durch die Düse 12 austreten. Bei normaler Betriebsweise liegt die Verweilzeit bei nur wenigen Sekunden. Bei speziellen Gemischen, die besonders langsam aufschäumen, kann die Verweildauer auch länger sein.

Die Länge der Verweildauer des Gemischs im Mischerrohr 4 kann durch mehrere Maßnahmen geregelt werden. Dazu gehören u. a. die Geschwindigkeit, mit der die Komponenten in den Mischer eingepumpt werden, die Drehgeschwindigkeit der Spirale 3, der Durchmesser und die Länge des Mischerrohres 4 und die Art der Spirale 3. Die optimale Einstellung ist dem Fachmann bekannt.

Die erfindungsgemäße Herstellung des Phenolresolharz-Gemischs erfolgt praktisch ohne nennenswerte Temperaturerhöhung des Gemischs. Eine etwaige Temperaturerhöhung um bis zu maximal 10 $^\circ$C ist dabei ohne Bedeutung. Die Resolharzkomponente kann deshalb bei der erfindungsgemäßen Verfahrensweise ohne vorangegangene Temperierung in den Mischer eingegeben werden, und die Wand des Mischers braucht nicht gekühlt zu werden. Das Resolharz als Hauptkomponente wird deshalb bei einer Temperatur zwischen 10 und 25 $^\circ$C, vorzugsweise zwischen 15 und 20 $^\circ$C eingegeben. Auch die übrigen Komponenten sollten nach Möglichkeit bei ihrer Dosierung in den Mischer die gleiche Temperatur haben. Tiefere Temperaturen können dann geduldet werden, wenn das Phenolresolharz aufgrund spezieller Rezeptur bei diesen Temperaturen eine genügende Viskosität besitzt, um als Flüssigkeit dosiert zu werden und um einen Flüssigkeitsring an der Rohrwandung zu bilden.

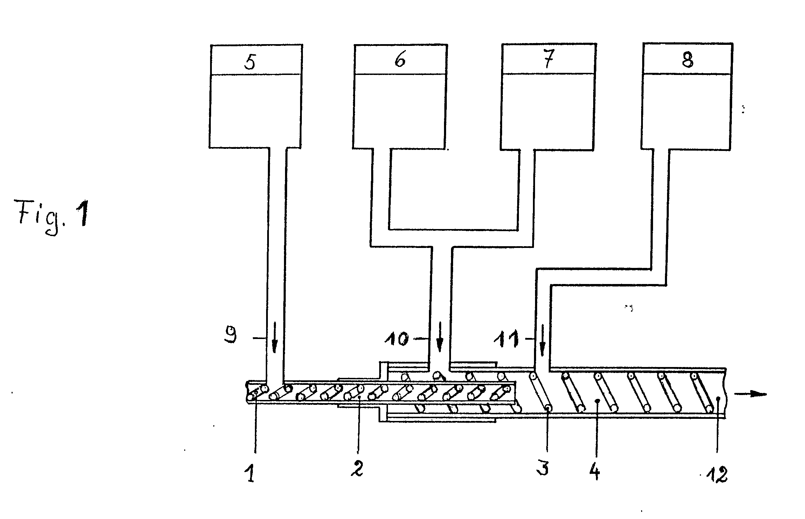

Die flüssigen Komponenten des Gemischs können gemäß Figur 1 über einen gemeinsamen Einlaß 10 in das Mischerrohr eingegeben werden. Es ist jedoch auch möglich und in manchen Fällen auch empfehlenswert, die flüssigen Komponenten durch voneinander getrennte Einlässe in das Mischerrohr einzuführen. Die Einlaßöffnungen in dem Mischerrohr 4 sind auch in diesen Fällen im Bereich des Injektorrohres 2.

In gleicher Weise ist es auch möglich, mehrere Feststoffe über eine oder mehrere Einlaßöffnungen 9 in das Injektorrohr 2 einzugeben.

Die erfindungsgemäße Arbeitsweise ermöglicht es, beliebige Feststoffe, die in schäum- und härtbaren Phenolresolharzen untergemischt enthalten sein können, in fester Form den Resolharzen unterzumischen. Zu diesen Feststoffen zählen u. a. Bortrioxid, Phosphorpentoxid, $BaSO_4$, Harnstoff, Füllstoffe wie Flugasche, Blähton, Glas-Schaumgranulat, Glasfasern, anorganische Oxide, z. B. Aluminiumoxid oder -oxidhydrat.

Die Füllstoffe können dabei in solchen Mengen eingesetzt werden, daß das im Mischer entstehende Phenolresolharz-Gemisch Viskositäten bis zu 30 000 cp/20 $^\circ$C haben kann. Die Gemische können also Feststoffgehalte bis zu etwa 80 %, je nach Art des Füllstoffes, enthalten und ergeben auch dann noch einen Phenolharzschaum mit optimalen Eigenschaften.

Zu den flüssigen Bestandteilen, die über die Einfüllöffnung(en) 10 dem Gemisch hinzugefügt werden, zählen hauptsächlich die Zellregulatoren und die Treibmittel. Letztere sind überwiegend niedrig siedende aliphatische Kohlenwasserstoffe mit Siedepunkten zwischen 40 und 90 $^\circ$C oder Chlorfluorkohlenwasserstoffe. Sie werden in Mengen zwischen 1 und 16 Gew.-%, bezogen auf das Resolharz, eingesetzt, wobei für die Herstellung von Schäumen hoher Dichte geringere Mengen eingesetzt werden als bei der Herstellung von Schäumen geringerer Dichte. Als Beispiele für oberflächenaktive Substanzen seien ethoxiliertes Rizinusöl

3

und ethoxilierte Fettsäureester genannt. Diese Substanzen werden dem Gemisch im allgemeinen in Mengen zwischen 2 und 4 Gew.-%, bezogen auf das Resolharz, hinzugefügt.

Die Härter liegen im allgemeinen auch in flüssiger Form vor. Geeignete Härter sind z. B. die Phenol-, Toluol-oder Naphthalinsulfonsäuren, Schwefelsäure (ggf. im Gemisch mit den genannten Sulfonsäuren) oder wäßrige Lösungen anderer anorganischer Säuren, wie z. B. HCl oder die Phosphorsäuren. Die Härter werden in Mengen zwischen 8 und 32 Gew.-%, bezogen auf das Resolharz, eingesetzt. Die Menge richtet sich nach der Art des Härters; sie ist dem Fachmann an sich bekannt.

Nach dem Verlassen des erfindungsgemäß gemischten Phenolresolharz-Gemischs aus dem Mischer wird das Gemisch so fort in an sich bekannte Formgebungsapparaturen eingegeben. In diesen Apparaturen schäumt das Gemisch dann zu Formkörpern vorgegebener Struktur aus. Solche Formkörper werden z. B. eingesetzt als Wärmeisolatoren, zum Brandschutz oder in hochgefüllter Form in Form von Sanitärartikeln.

Beispiele

In einen Injektionsmischer entsprechend Figur 1 wurden aus dem Vorratsbehälter 5 kontinuierlich über die Öffnung 9 der Feststoff und aus den Behältern 6 und 7 ein schäumfähiges Resolharz bzw. das Treibmittel über den Einlaß 10 eindosiert. Gleichzeitig erfolgte über den Einlaß 11 die Zugabe des Härters aus dem Vorratsbehälter 8. Die Dosierung wurde mit in der Figur 1 nicht gezeigten Pumpen bzw. Feststoff-Dosiergeräten durchgeführt. Die Art der Komponenten und die Dosiergeschwindigkeiten gehen aus der Tabelle 1 hervor.

Die Komponenten hatten bei ihrer Eingabe in den Mischer eine Temperatur von etwa 18 °C. Die Temperatur beim Austritt aus dem Mischer ist in der Tabelle 1 angegeben. Auch die Verweilzeiten des Gemischs sind in der Tabelle 1 angegeben.

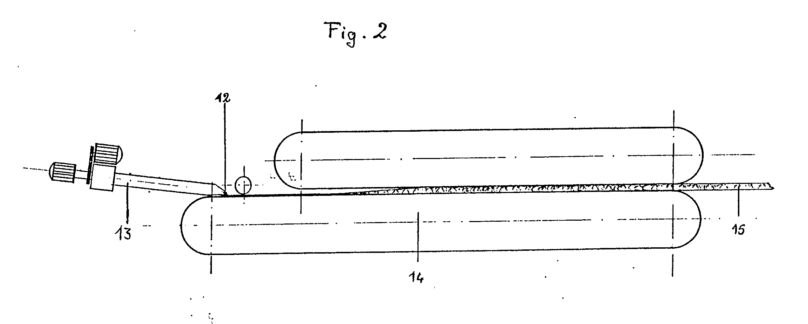

Das aus dem Injektionsmischer austretende Gemisch wurde in eine kontinuierlich arbeitende Doppelbandpresse entsprechend Figur 2 gegeben, die folgende Daten aufwies:

| Konstruktion | Plattenbänder |
|---|---|
| Länge der Doppelbandpresse | 20 m |
| Abstand Ober- zu Unterband | 50 mm |
| Breite der Doppelbandpresse | 1,2 m |
| Temperatur der Doppelbandpresse | 50 bis 60 °C |
| Bandgeschwindigkeit | siehe Tabelle. |

Tabelle 1

| Versuchsbeispiel | | 1 | 2 | 3 | 4 |
|---|---|---|---|---|---|
| Phenolresolharz | | | | | |
| Menge | kg/min | 8,0 | 7,0 | 16,0 | 5,5 |
| Treibmittel | | | | | |
| Art<br>Menge | cm³/min | n-Pentan<br>200 | CFK [1)]<br>564 | n-Pentan<br>1 120 | n-Pentan<br>3 100 |
| Feststoff 1 | | | | | |
| Art<br>Menge | kg/min | Al(OH)₃<br>8,0 | H₃BO₃<br>1,75 | Al(OH)₃<br>1,60 | Blähton<br>15,2 |
| Füllstoff 2 | | | | | |
| Art<br>Menge | kg/min | -<br>- | -<br>- | Glasfaser<br>0,64 | -<br>- |
| Härter | | | | | |
| Typ<br>Menge | kg/min | STW [2)]<br>1,8 | C [3)]<br>0,85 | C [3)]<br>2,0 | STW [2)]<br>1,1 |
| Durchlaufzeit | sec | 3 - 5 | 5 - 7 | 3 - 5 | 7 - 9 |
| Gemischtemperatur beim Mischeraustritt | °C | 26 | 24 | 24 | 23 |
| Bandgeschwindigkeit | m/min | 0,7 | 4,0 | 4,7 | 0,8 |
| Schaumstoffeigenschaften | | | | | |
| Raumgewicht<br>Druckfestigkeit<br>Wärmeleitfähigkeit<br>Brandklasse | kg/m³<br>N/mm²<br>W/mk<br>DIN 4102/1 | 426<br>-<br>-<br>A 2 | 43,7<br>0,206<br>0,031<br>B 1 | 70,6<br>0,265<br>0,035<br>B 2 | 495<br>-<br>-<br>B 1 |

1) CFK = Monofluortrichlormethan

2) STW = Gemisch aus 40 Gew.-% Toluolsulfonsäure, 20 Gew.-% $H_2SO_4$ (conc), 40 Gew.-% $H_2O$

3) C = Gemisch aus 20 Gew.-% Phenolsulfonsäure, 80 Gew.-% $H_2SO_4$ (65 %ig)

**Ansprüche**

1. Verfahren zur kontinuierlichen Herstellung eines schäum- und härtbaren, Feststoffe enthaltenden Phenolresolharz-Gemischs in einem kontinuierlich betriebenen Mischer, **dadurch gekennzeichnet,** daß die Herstellung in einem an sich bekannten Injektionsmischer erfolgt, bei dem ein mit einer Injektionsspirale (1) versehenes Injektorrohr (2) in ein mit einer Misch- und Förderspirale (3) versehenes Mischerrohr (4) hineinragt, und die Komponenten des Gemischs in der Weise dem Mischer zugeführt werden, daß man
a) die Feststoffe in das Injektorrohr (2),
b) die flüssigen Bestandteile mit Ausnahme der Härterflüssigkeit in den Teil des Mischerrohres (4), in den das Injektorrohr (2) hineinragt, und
c) die Härterflüssigkeit in den Bereich des Mischerrohres (4), der in Richtung zur Austrittsdüse (12) des Mischerrohres (4) hinter dem Ende des Injektorrohres (2) angeordnet ist,
eingibt, und die Geschwindigkeit des Masseflusses so regelt, daß das erhaltene homogene Gemisch vor seiner Aushärtung aus der Austrittsdüse (12) des Mischers austritt.
2. Verfahren gemäß Anspruch 1, dadurch gekennzeichnet, daß die flüssigen Bestandteile (6) und (7) über mehrere Einfüllöffnungen (10) in das Mischerrohr eingegeben werden.

3. Verfahren gemäß Anspruch 1 oder 2, dadurch gekennzeichnet, daß die Verweilzeit des erhaltenen Gemischs in dem Mischer zwischen 3 und 25 Sekunden beträgt.

4. Verfahren gemäß einem der Ansprüche 1 bis 3, dadurch gekennzeichnet, daß die einzelnen Komponenten bei ihrer Eingabe eine Temperatur zwischen 10 und 25 °C, vorzugsweise zwischen 15 und 20 °C besitzen.

Fig. 1

EP 0 331 968 A1

Fig. 2

EP 0 331 968 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | FR-A-2 414 952 (LIGOUZAT) <br> * Insgesamt * <br> --- | 1-4 | B 29 B 7/42 <br> B 29 B 7/00 |
| Y | DE-A-3 207 432 (KWM) <br> * Zusammenfassung; Figur * <br> --- | 1-4 | |
| A | FR-A-2 443 277 (LIGOUZAT) <br> --- | | |
| A | US-A-4 194 844 (WALLING) <br> --- | | |
| A | US-A-3 920 223 (KRUEGER) <br> --- | | |
| A | FR-A-2 072 362 (BUSS) <br> ----- | | |

RECHERCHIERTE SACHGEBIETE (Int. Cl.4)

B 01 F
B 29 B

Der vorliegende Recherchenbericht wurde für alle Patentansprüche erstellt

| Recherchenort | Abschlußdatum der Recherche | Prüfer |
|---|---|---|
| DEN HAAG | 07-06-1989 | PEETERS S. |